# EUROPÄISCHE PATENTANMELDUNG

(11) **EP 4 112 231 A1**
(43) Veröffentlichungstag der Anmeldung: **04.01.2023**
(21) Anmeldenummer: 21183061.7
(22) Anmeldetag: 01.07.2021
(51) Int. Cl.: B25F 5/00, B23B 49/00

(54) **MECHANISCHE VORRICHTUNG ZUR ANZEIGE EINER ANPRESSKRAFT UND VERFAHREN ZUM BETRIEB EINER WERKZEUGMASCHINE**

(71) Anmelder: Hilti Aktiengesellschaft, 9494 Schaan (LI)
(72) Erfinder: Steingruber, Adrian, 86830 Schwabmünchen (DE); Britz, Rory, 86807 Buchloe (DE)
(74) Vertreter: Hilti Aktiengesellschaft Corporate Intellectual Property

(57) **Zusammenfassung**

Die Erfindung betrifft eine mechanische Vorrichtung zur Anzeige einer Anpresskraft für eine Werkzeugmaschine (10), wobei die Werkzeugmaschine ein bewegliches Bauteil (18) umfasst, das in Abhängigkeit von der Anpresskraft seine Position verändern kann. In einem Gehäuse (14) der Werkzeugmaschine (10) kann eine Öffnung (16) vorgesehen sein, wobei die Öffnung (16) einen Blick freigibt auf ein Bauteil (18) der Werkzeugmaschine, das unterhalb der Öffnung (16) angeordnet vorliegt, wobei das Bauteil (18) eine Codierung (20) für unterschiedliche Bereiche der Anpresskraft aufweist. Das bewegliche Bauteil (18) kann auch so ausgestaltet sein, dass es je nach Anpresskraft mehr oder weniger stark aus dem Gehäuse (14) der Werkzeugmaschine (10) herausragt. Die Erfindung betrifft auch ein Verfahren zum Betrieb einer Werkzeugmaschine (10) , bei dem eine Anpresskraft, mit der eine Werkzeugmaschine auf einen zu bearbeitenden Untergrund gedrückt wird, durch die mechanische Vorrichtung angezeigt und erforderlichenfalls geändert bzw. angepasst werden kann.

## Beschreibung

Die Erfindung betrifft eine mechanische Vorrichtung zur Anzeige einer Anpresskraft für eine Werkzeugmaschine, wobei die Werkzeugmaschine ein bewegliches Bauteil umfasst, wobei das bewegliche Bauteil in Abhängigkeit von der Anpresskraft seine Position verändern kann. In einem Gehäuse der Werkzeugmaschine kann eine Öffnung vorgesehen sein, wobei die Öffnung einen Blick freigibt auf ein Bauteil der Werkzeugmaschine, das unterhalb der Öffnung angeordnet vorliegt, wobei das Bauteil eine Codierung für unterschiedliche Bereiche der Anpresskraft aufweist. Das bewegliche Bauteil kann auch so ausgestaltet sein, dass es je nach Anpresskraft mehr oder weniger stark aus dem Gehäuse der Werkzeugmaschine herausragt. In einem zweiten Aspekt betrifft die Erfindung ein Verfahren zum Betrieb einer Werkzeugmaschine, bei dem eine Anpresskraft, mit der eine Werkzeugmaschine auf einen zu bearbeitenden Untergrund gedrückt wird, durch die mechanische Vorrichtung angezeigt und erforderlichenfalls geändert bzw. angepasst werden kann. Darüber hinaus betrifft die Erfindung eine Werkzeugmaschine mit einer mechanischen Vorrichtung. Mit Hilfe der Erfindung kann der Nutzer besser als zuvor abschätzen, ob er die Werkzeugmaschine im optimalen Anpressbereich betreibt. Darüber hinaus kommen bei der Erfindung vorteilhafterweise keine aufwändigen, fehleranfälligen elektronischen Mess- und Anzeige-Vorrichtungen und Verfahren zur Anwendung. Vielmehr stellt die Erfindung eine einfache, mechanische Methode zum Anzeigen einer Anpresskraft, mit der eine Werkzeugmaschine auf einen zu bearbeitenden Untergrund gedrückt wird, dar.

### Hintergrund der Erfindung:

Im Stand der Technik sind Werkzeugmaschinen zur Bearbeitung von Untergründen bekannt. Beispielsweise können Bohrhämmer, Kombi-Hämmer oder Rotary-Hämmer verwendet werden, um Löcher in einen Untergrund einzubringen oder um den Untergrund zu bearbeiten oder abzutragen. Solche Werkzeugmaschinen weisen üblicherweise Schlagwerke auf, mit denen das Werkzeug der Werkzeugmaschine in den Untergrund hineingetrieben werden kann. Für eine optimale Abbau- bzw. Bohrleistung sollen solche Werkzeugmaschinen in einem optimalen Anpressbereich betrieben werden. Der Begriff "optimaler Anpressbereich" bedeutet im Sinne der Erfindung bevorzugt, dass die die Werkzeugmaschine mit einer mittleren Anpresskraft auf den zu bearbeitenden Untergrund gedrückt wird. Der Betrieb der Werkzeugmaschine in einem mittleren Anpressbereich ist darüber hinaus anzustreben, weil dadurch Vibrationen, die bei Betrieb der Werkzeugmaschine auftreten, gering gehalten werden können. Es besteht daher ein Interesse des Nutzers einer Werkzeugmaschine, die Anpresskraft, mit der die Werkzeugmaschine auf den zu bearbeitenden Unterdruck gepresst wird, zu kennen.

Im Stand der Technik sind allerdings keine befriedigenden technischen Lösungen für eine einfache, mechanische Anzeige der Anpresskraft bekannt. Aus entfernten technischen Bereichen sind elektronische Anzeigen auf einem Display bekannt, die das Ergebnis von aufwändigen Mess- und Auswertungsverfahren anzeigen können. Solche elektronischen Anzeigen und Auswertungen sind allerdings fehleranfällig. Außerdem können Displays, wie sie aus dem Stand der Technik bekannt sind, häufig nicht so an der Werkzeugmaschine angeordnet werden, dass der Nutzer die aktuelle Anpresskraft leicht einsehen bzw. schnell erfassen kann. Häufig sind bekannte Anzeigen zu klein, zu kontrastarm oder schlicht an einer nicht-einsehbaren Stelle angeordnet, so dass der Nutzer der Werkzeugmaschine keinen Erkenntnisgewinn durch die elektronische Anzeige hat.

Es sind im Stand der Technik darüber hinaus Anzeigen bekannt, die Quer- oder Torsionskräfte anzeigen können. Allerdings hilft die Kenntnis solcher Kräfte dem Nutzer nicht bei der Beurteilung, ob er die Werkzeugmaschine in einem optimalen Anpresskraft betreibt oder nicht.

Aufgabe der vorliegenden Erfindung ist es daher, die vorstehend beschriebenen Mängel und Nachteile des Standes der Technik zu überwinden und eine verbesserte Anzeigevorrichtung und ein verbessertes Verfahren zum Betrieb einer Werkzeugmaschine anzugeben, um dem Nutzer der Werkzeugmaschine anzuzeigen, ob die Werkzeugmaschine in einem optimalen Anpresskraft betrieben wird. Die bereitzustellende Anzeigevorrichtung soll möglichst einfach und robust ausgebildet sein und die Anzeige soll vom Nutzer der Werkzeugmaschine möglichst schnell und einfach erfasst werden können.

Die Aufgabe wird gelöst durch den Gegenstand der unabhängigen Ansprüche. Vorteilhafte Ausführungsformen des erfindungsgemäßen Gegenstands werden in den abhängigen Ansprüchen beschrieben.

### Beschreibung der Erfindung:

Die Aufgabe wird dabei in einem ersten Aspekt durch eine mechanische Vorrichtung zur Anzeige einer Anpresskraft für eine Werkzeugmaschine gelöst, wobei die Werkzeugmaschine ein bewegliches Bauteil umfasst, wobei das bewegliche Bauteil in Abhängigkeit von der Anpresskraft seine Position verändern kann. Mit der Erfindung kann eine nicht-elektronische Anzeigevorrichtung bereitgestellt werden, die vom Nutzer leicht eingesehen werden kann, so dass die angezeigte Anpresskraft von dem Nutzer besonders einfach, schnell und vor allem während des Betriebs der Werkzeugmaschine erfasst werden kann. Damit wendet sich die Erfindung insbesondere von konventionellen Anzeigen ab, wie Displays, die aus dem Stand der Technik bekannt sind und üblicherweise als elektronische Anzeigevorrichtungen ausgebildet sind. Tests haben gezeigt, dass die vorgeschlagene mechanische Vorrichtung zur Anzeige der Anpresskraft besonders robust und wenig fehleranfällig ist.

In einer bevorzugten Ausgestaltung der Erfindung kann das bewegliche Bauteil seine Höhe verändern, das heißt im Sinne der Erfindung bevorzugt, dass es je nach Anpresskraft mehr oder weniger stark aus dem Gehäuse der Werkzeugmaschine herausragt. Beispielsweise kann das bewegliche Bauteil bei einem starken Anpressdruck sehr weit und auffällig aus dem Gehäuse der Werkzeugmaschine hervorragen, beispielsweise um eine Höhe von 1 cm, während das bewegliche Bauteil bei einem geringen oder optimalen Anpressdruck im Wesentlichen in dem Gehäuse versenkt vorliegt oder nur wenig, vorzugsweise kaum merklich, übersteht. Selbstverständlich kann die Zuordnung zwischen Anpresskraft und Höhe des überstehenden beweglichen Bauteils auch genau umgekehrt sein. Vorzugsweise kann das bewegliche Bauteil in dieser Ausgestaltung eine Codierung aufweisen, die neben dem Überstand bzw. der Höhe des beweglichen Bauteils anzeigt, ob die Werkzeugmaschine in einem optimalen Arbeitsbereich betrieben wird oder nicht. Beispielsweise kann ein oberer Bereich des beweglichen Bauteils orange ausgebildet sein, während ein mittlerer Bereich grün ausgebildet ist und ein unterer Bereich rot, wobei in diesem roten Bereich eine zu hohe Anpresskraft vorliegt. Selbstverständlich sind auch andere Farbkombinationen, Reihenfolgen und Abstufungen denkbar.

In einer besonders bevorzugten Ausgestaltung der Erfindung weist die Werkzeugmaschine ein Gehäuse auf, wobei in dem Gehäuse der Werkzeugmaschine eine Öffnung vorgesehen ist, wobei die Öffnung einen Blick freigibt auf ein Bauteil der Werkzeugmaschine, das unterhalb der Öffnung angeordnet vorliegt, wobei das Bauteil eine Codierung für unterschiedliche Bereiche der Anpresskraft aufweist.

Es ist im Sinne der Erfindung bevorzugt, dass die Öffnung der mechanischen Vorrichtung auf einer Sichtfläche der Werkzeugmaschine angeordnet vorliegt, wobei die Sichtfläche beispielsweise eine Oberseite der Werkzeugmaschine sein kann. Eine Sichtfläche ist vorzugsweise dadurch gekennzeichnet, dass die Sichtfläche von dem Nutzer der Werkzeugmaschine gut eingesehen werden kann. Beispielsweise können auch die Oberseiten von Vorsprüngen Sichtflächen im Sinne der Erfindung sein.

Die Öffnung gibt einen Blick auf ein Bauteil der Werkzeugmaschine frei, wobei das Bauteil unterhalb der Öffnung angeordnet vorliegt. Vorzugsweise weist das Gehäuse der Werkzeugmaschine eine Oberseite auf, die der Umgebung der Werkzeugmaschine zugewandt ist und die bei der Arbeit mit der Werkzeugmaschine von einem Nutzer gut eingesehen werden kann, und eine Unterseite, die dem Innenraum der Werkzeugmaschine zugewandt ist. Die Öffnung verläuft vorzugsweise vollständig durch das Gehäuse der Werkzeugmaschine hindurch, so dass der Nutzer durch die Öffnung in das Innere der Werkzeugmaschine schauen kann. Auf der Unterseite des Gehäuses ist das Bauteil angeordnet, so dass der Nutzer der Werkzeugmaschine auf das Bauteil schaut, wenn sein Blick auf die Gehäuse-Öffnung der Werkzeugmaschine fällt. Das Bauteil weist eine Codierung für unterschiedliche Bereiche der Anpresskraft auf, so dass die unterschiedlichen Bereiche des Bauteils durch die Öffnung gut zu erkennen sind, wenn die Werkzeugmaschine mit unterschiedlicher Anpresskraft gegen den zu bearbeitenden Untergrund gedrückt wird.

Die Anzeige der unterschiedlichen Bereiche der Anpresskraft wird vorteilhafterweise dadurch ermöglicht, dass das Bauteil eine Anzahl unterschiedlicher Bereiche aufweist, die unterschiedliche Anpresskräfte symbolisieren. Beispielsweise kann eine solche Codierung des Bauteils eine Farb-Codierung sein, so dass unterschiedliche Farben für eine optimale, eine zu geringe oder eine zu starke Anpresskraft stehen. Beispielsweise kann die Farbe "grün" eine optimale Anpresskraft symbolisieren, während die Farben "gelb", "orange" oder "rot" zu geringe oder zu starke Anpresskräfte symbolisieren. Eine optimale Anpresskraft kann beispielsweise in einem Bereich von 60 bis 160 Newton (N) liegen. Sie kann allerdings für unterschiedliche Kombinationen von Werkzeugmaschinen-Typen und Untergründen bzw. Applikationen auch größer oder kleiner sein.

Beispielsweise kann das Bauteil auch Markierungen und/oder Symbole umfassen, wobei die Markierungen und/oder Symbole die unterschiedlichen Bereiche der Anpresskraft anzeigen. Ein grüner Haken kann zum Beispiel anzeigen, dass die Anpresskraft in einem optimalen Arbeitsbereich liegt, während rote Kreuze verdeutlichen können, dass die Anpresskraft, mit der die Werkzeugmaschine aktuell gegen den zu bearbeitenden Untergrund gedrückt wird, zu groß oder zu klein ist. Die Formulierung "Markierungen und/oder Symbole" schließt vorzugsweise auch Buchstaben, Ziffern oder sonstige alphanummerische Angaben oder Codes ein.

In einer bevorzugten Ausgestaltung der Erfindung kann das Bauteil als Schiebe-Element ausgebildet sein. Es wird in diesem Zusammenhang bevorzugt auch als "Schieber" oder "Schiebe-Element" bezeichnet. Es ist im Sinne der Erfindung bevorzugt, dass die Werkzeugmaschine einen Motor und ein Schlagwerk zum Antrieb des Werkzeugs der Werkzeugmaschine aufweist, wobei der Motor und das Schlagwerk eine Einheit bilden können. Der Schieber kann mit der Einheit aus Motor und Schlagwerk oder mit dem Motor und/oder dem Schlagwerk verbunden vorliegen. Vorzugsweise wird das Bauteil durch ein Anpressen der Werkzeugmaschine auf einen zu bearbeitenden Untergrund bewegt, so dass das Bauteil unter der Öffnung verschoben wird. Insbesondere können durch die Verschiebung des Bauteils unterschiedliche Bereiche der Codierung von dem Nutzer eingesehen werden. Beispielsweise kann der Nutzer, wenn er einen grünen Bereich des Schiebers durch die Öffnung des Gehäuses der Werkzeugmaschine sieht, schnell erfassen, dass die Werkzeugmaschine in einem optimalen Anpressbereich betrieben wird. Er kann aber auch schnell erkennen, dass die Werkzeugmaschine in einem zu geringen oder einen zu starken Anpressbereich betrieben wird, wenn er durch die Öffnung des Gehäuses einen roten Bereich des Bauteils sieht. Der Nutzer kann dann geeignete Maßnahmen ergreifen, damit die Werkzeugmaschine in dem optimalen Arbeitsbereich betrieben werden kann, insbesondere um das Auftreten von unerwünschten Vibrationen wirksam zu verhindern.

Es ist im Sinne der Erfindung bevorzugt, dass das Anpressen der Werkzeugmaschine auf den zu bearbeitenden Untergrund eine Bewegung des Bauteils bewirkt, so dass das Bauteil unter der Öffnung verschoben wird und wodurch unterschiedliche Bereiche des Schiebe-Elements bzw. der Codierung von dem Nutzer eingesehen werden können. Vorzugsweise ist das Bauteil durch das Anpressen der Werkzeugmaschine um eine Länge I verschiebbar, wobei die Länge I in einem Bereich von 0,5 bis 2 cm, bevorzugt in einem Bereich von 0,8 bis 1,2 cm und bevorzugt bei etwa 1 cm liegt. Die Bewegung des beweglichen Bauteils wird insbesondere dadurch erreicht, dass das bewegliche Bauteil mit der Einheit aus Motor und Schlagwerk oder mit dem Motor und/oder dem Schlagwerk verbunden vorliegt.

Bei der Werkzeugmaschine kann es sich insbesondere um einen Bohrhammer, Kombi-Hammer, Rotary-Hammer handeln. Die Werkzeugmaschine kann insbesondere in der sog. Chassis-Bauweise ausgestaltet sein, bei der eine Entkopplung zwischen einem Handgriff und der Motor-Schlagwerk-Einheit besteht. Wenn mehrere Handgriffe an der Werkzeugmaschine vorhanden sind, ist es bevorzugt, dass beide Griffe der Werkzeugmaschine mit Chassis-Bauweise vom Gehäuse entkoppelt vorliegen. Mit anderen Worten weist die Werkzeugmaschine vorzugsweise mindestens einen Handgriff auf, wobei der mindestens eine Handgriff von dem Schlagwerk der Werkzeugmaschine entkoppelt vorliegt. Im Sinne der Erfindung werden die Formulierungen "Werkzeugmaschine mit entkoppeltem Handgriff" bzw. "Werkzeugmaschine mit Sub-Chassis-Bauweise" vorzugsweise synonym verwendet. Zur Gewährleistung der Entkopplung kann die Werkzeugmaschine elastische Elemente aufweisen, die die Entkopplung zwischen dem Schlagwerk und dem mindestens einen Handgriff der Werkzeugmaschine bewirken. Die elastischen Elemente können beispielsweise als Federn ausgebildet sein, die eine Vibrationsreduktions-Funktion der Werkzeugmaschine ermöglichen. Die Federn sind vorzugsweise Bestandteil des Chassis.

Wenn die Werkzeugmaschine von dem Nutzer aus dem Ruhezustand, der durch eine Anpresskraft von im Wesentlichen 0 Newton gekennzeichnet ist, mit einer Anpresskraft größer 0 Newton gegen den zu bearbeitenden Untergrund gedrückt wird, werden die elastischen Elemente gespannt. Beispielsweise können die elastischen Elemente zusammengedrückt, d.h. komprimiert werden. Es sind aber auch Ausgestaltungen der Erfindung mit Zugfedern denkbar. Es ist im Sinne der Erfindung insbesondere bevorzugt, dass die Federn von der Motor-Schlagwerks-Einheit der Werkzeugmaschine zusammengedrückt werden. Der Federweg der Federn kann beispielsweise 1 cm betragen, wobei der Federweg der elastischen Elemente vorzugsweise der Länge I entspricht, um die das Schiebe-Element verschoben wird, wenn die Werkzeugmaschine mit einer Anpresskraft auf einen Untergrund gedrückt wird. Bei einer zu geringen Anpresskraft von beispielsweise 40 N kann zum Beispiel eine Einfederung von 2 mm hervorgerufen werden, wenn die Feder eine Feder-Konstante von 20 N/mm aufweist. Eine zu hohe Anpresskraft kann beispielsweise bei 180 N liegen, wobei diese zu hohe Anpresskraft einer Länge I bzw. Einfederung von 9 mm entsprechen kann, wenn die Feder eine Feder-Konstante von 20 N/mm aufweist. Diese zu geringen und zu hohen Anpresskräfte können dem Nutzer vorteilhafterweise dadurch signalisiert werden, dass der Nutzer durch die Gehäuse-Öffnung einen roten Bereich des Bauteils oder ein rotes Symbol auf dem Bauteil sieht. Der optimale Arbeitsbereich kann durch einen grünen Bereich des Schiebers bzw. ein grünes Symbol auf dem Schiebe-Element angezeigt werden. Der optimale Arbeitsbereich der Werkzeugmaschine liegt beispielsweise bei einer Länge I bzw. Einfederung von 3 bis 8 mm und einer Anpresskraft von 60 bis 160 N vor.

Die Erfindung stellt vorteilhafterweise eine simple, mechanische Lösung für Chassis-Geräte dar, die es dem Nutzer ermöglicht, die Anpresskraft in einem optimalen, mittleren Kraftbereich zu halten, um die optimale Leistung der Werkzeugmaschine bei gleichzeitig niedrigen Hand-Arm-Vibrationen zu gewährleisten. Der Betrieb der Werkzeugmaschine in dem optimalen Kraft- bzw. Anpressbereich wird insbesondere dadurch ermöglicht, dass der Nutzer mit einem Blick auf die Öffnung in dem Gehäuse der Werkzeugmaschine schnell erfassen kann, ob die Werkzeugmaschine in einem optimalen Arbeitsbereich betrieben wird. Wenn nicht, kann er schnell Maßnahmen ergreifen, um die Anpresskraft so zu verändern, dass sie im optimalen Bereich von beispielsweise 60 bis 160 N liegt. Im Kontext der Erfindung ist in dem Gehäuse der Werkzeugmaschine eine Öffnung vorgesehen, wobei der Nutzer anhand dieser zusätzlichen Öffnung erkennen kann, dass es sich bei der Werkzeugmaschine um ein Gerät in Chassis-Bauweise handelt.

Es ist im Sinne der Erfindung bevorzugt, dass ein Abstand d zwischen dem Bauteil und einer Unterseite des Gehäuses der Werkzeugmaschine so gering ausgewählt ist, dass im Wesentlichen kein Staub über die Öffnung in die Werkzeugmaschine eindringen kann. Mit anderen Worten ist die vorgeschlagene Vorrichtung im Wesentlichen staubdicht ausgebildet. Vorzugsweise weisen das Schiebe-Element und die Unterseite des Gehäuses der Werkzeugmaschine einen Abstand d zueinander auf, der so gering ist, dass praktisch kein Staub von außen in das Innere der Werkzeugmaschine gelangen kann. Der Abstand d ist darüber hinaus so klein ausgewählt, dass keine Körperteile oder kleinen Objekte durch die Öffnung in die Werkzeugmaschine hineingeraten können. Ein solches unerwünschtes Eindringen von Körperteilen oder Objekten kann zu Verletzungen des Nutzers der Werkzeugmaschine führen, beispielsweise durch eine Quetschung, oder zu einer Beschädigung der Werkzeugmaschine. Auf der anderen Seite ist der Abstand d zwischen Schiebe-Element und Gehäuse der Werkzeugmaschine so gewählt sein, dass keine zu starke Reibung zwischen der Gehäuse-Unterseite und dem Bauteil entsteht, da eine solche Reibung die Entkopplung von Motor-Schlagwerk-Einheit und Handgriff beeinträchtigen kann. Es ist im Sinne der Erfindung bevorzugt, dass der Abstand d so ausgewählt wird, dass ein Eindringen von Partikeln mit einem Durchmesser von größer als 4 mm, bevorzugt größer als 3 mm, besonders bevorzugt größer als 2 mm und am meisten bevorzugt größer als 1 mm wirksam vermieden wird.

In einem Ausführungsbeispiel der Erfindung ist auf einer Oberseite der Werkzeugmaschine eine Öffnung in dem Gehäuse vorgesehen, wobei unterhalb der Öffnung des Gehäuses ein Bauteil der Werkzeugmaschine angeordnet vorliegt, wobei das Bauteil mit dem Motor, dem Schlagwerk und/oder einer Motor-Schlagwerks-Einheit der Werkzeugmaschine verbunden vorliegt und wobei das Bauteil eine Codierung für unterschiedliche Bereiche der Anpresskraft aufweist, wobei die Codierung durch die Öffnung sichtbar sind.

Die Öffnung kann schlitzförmig ausgebildet sein. Sie kann aber auch jede andere denkbare Form aufweisen, wie rund, oval, (recht-)eckig oder rautenförmig, ohne darauf beschränkt zu sein. Die Öffnung kann schräge Wände aufweisen, die so ausgestaltet sein können, dass sich eine Fläche der Öffnung von oben nach unten verjüngt.

In einem zweiten Aspekt betrifft die Erfindung ein Verfahren zum Betrieb einer Werkzeugmaschine, wobei das Verfahren vorzugsweise während des Betriebs der Werkzeugmaschine erfolgen kann. Insbesondere kann es regelmäßig wiederholt werden, so dass der Nutzer vorteilhafterweise stets mit einem Anpressdruck arbeitet, der überwiegend in einem optimalen Bereich liegt. Das Verfahren weist vorzugsweise den Charakter eines Regelkreises auf, bei dem mit einem ersten Anpressdruck gearbeitet wird. Der Nutzer kann während der Arbeit mit der Werkzeugmaschine an der vorgeschlagenen mechanischen Vorrichtung ablesen, ob die Werkzeugmaschine im optimalen Anpressdruckbereich betrieben wird und erforderlichenfalls eine Korrektur des Anpressdrucks vornehmen, beispielsweise indem der Nutzer das Gerät stärker in Richtung des zu bearbeitenden Untergrund drückt oder die Werkzeugmaschine entlastet, d.h. weniger stark auf den Untergrund gedrückt wird. Dadurch ergibt sich ein zweiter, d.h. korrigierter Anpressdruck, mit dem die Werkzeugmaschine betrieben wird. In diesem zweiten Aspekt betrifft die Erfindung ein Verfahren zum Betrieb einer Werkzeugmaschine, wobei das Verfahren durch die folgenden Schritte gekennzeichnet ist:
a) Betrieb der Werkzeugmaschine mit einem ersten Anpressdruck,
b) Ablesen des ersten Anpressdruck mittels der mechanischen Vorrichtung,
c) Korrektur des Anpressdrucks, wenn der erste Anpressdruck nicht in einem optimalen Arbeitsbereich liegt, so dass die Werkzeugmaschine mit einem zweiten Anpressdruck betrieben wird, oder
d) Fortführung des Betriebs mit dem ersten Anpressdruck, wenn der erste Anpressdruck in einem optimalen Arbeitsbereich liegt.

Im Kontext der vorliegenden Erfindung wird darüber hinaus ein Verfahren zum Betrieb einer Werkzeugmaschine offenbart, wobei das Verfahren durch die folgenden Schritte gekennzeichnet ist:
a) Bereitstellung einer vorgeschlagenen Werkzeugmaschine,
b) Anpressen der Werkzeugmaschine auf einen zu bearbeitenden Untergrund,
c) Ablesen der Anpresskraft durch einen Nutzer der Werkzeugmaschine anhand einer Codierung eines Bauteils der Werkzeugmaschine,
   wobei das Bauteil unterhalb einer Öffnung in einem Gehäuse der Werkzeugmaschine angeordnet vorliegt und wobei die Codierung unterschiedliche Bereiche der Anpresskraft angibt.

Das vorgeschlagene Verfahren stellt insbesondere ein Verfahren zur Anzeige einer Anpresskraft, mit der eine Werkzeugmaschine auf einen zu bearbeitenden Untergrund gedrückt wird, dar. Die für die vorgeschlagene Anzeigevorrichtung beschriebenen Definitionen, technischen Wirkungen und Vorteile gelten für das vorgeschlagene Betriebsverfahren analog. Es ist im Sinne der Erfindung bevorzugt, dass das Bauteil durch das Anpressen der Werkzeugmaschine bewegt werden kann, so dass bei unterschiedlich großen Anpresskräften unterschiedliche Bereiche der Codierung bzw. des Schiebe-Elements durch die Öffnung im Gehäuse der Werkzeugmaschine einsehbar sind, wobei bei unterschiedlichen Bereiche der Codierung für unterschiedliche Bereich der Anpresskraft stehen. Diese Bewegung des Bauteils erfolgt vorzugsweise relativ zum Gehäuse der Werkzeugmaschine. Beispielsweise kann sich ein Schiebelement unterhalb einer Gehäuse-Öffnung bewegen, so dass jeweils unterschiedliche Bereiche des Schiebeelements sichtbar werden oder das bewegliche Bauteil kann als Knopf oder Stopfen ausgebildet sein, der durch eine Öffnung in dem Gehäuse der Werkzeugmaschine aus diesem herausragt, wobei die Höhe des Knopfes oder des Stopfens die Anpresskraft anzeigt bzw. ob die Werkzeugmaschine in einem optimalen Bereich für die Anpresskraft betrieben wird. In beiden Fällen erfolgt die Bewegung des Bauteils relativ zum Gehäuse der Werkzeugmaschine, beispielsweise in lateraler Richtung beim Schiebeelement oder in vertikaler Richtung beim Knopf oder Stopfen.

In einem weiteren Aspekt betrifft die Erfindung eine Werkzeugmaschine, die eine erfindungsgemäß vorgeschlagene mechanische Vorrichtung umfasst.

### Ausführungsbeispiel der Erfindung:

Auf einer Sichtfläche der Werkzeugmaschine, die beispielsweise eine Oberseite des Gerätegehäuses sein kann, befindet sich eine bevorzugt schlitzförmige Öffnung, die aber auch jede andere, denkbare Form aufweisen kann, wie kreisrund, oval, dreieckig oder rechteckig. Unter dieser Gehäuseöffnung wird ein zusätzliches Bauteil sichtbar, das mit einer Schlagwerk-Motor-Einheit der Werkzeugmaschine verbunden ist. Dieses zusätzliche Bauteil kann unterschiedliche Farben oder Markierungen, wie Ziffern und/oder Symbole, aufweisen, die für einen entsprechenden Kraft- bzw. Anpressbereich stehen. Eine Ausführungsform der Erfindung sieht beispielsweise eine Einfärbung der sichtbaren Oberfläche des zusätzlichen Bauteils vor, wobei das Bauteil vorzugsweise auch als Schiebe-Element bezeichnet werden kann. Dabei kann ein orange-farbener Bereich für eine zu geringe oder eine zu hohe Kraft stehen, während eine grüne Einfärbung des Schiebe-Elements für einen optimalen Kraftbereich steht.

Wird nun die Anpresskraft aus dem Ruhezustand, in dem die Anpresskraft "null" ist, erhöht, so werden die Federn des Chassis durch die Motor-Schlagwerk-Einheit der Werkzeugmaschine zunehmend komprimiert, bis der Federweg, der beispielsweise 10 mm beträgt, vollständig oder im Wesentlichen vollständig aufgebraucht ist. Auch das Schiebe-Element wird in diesem Fall mit steigender Anpresskraft unter der Öffnung beispielsweise um eine Länge I von 10 mm vorbeigeschoben, da das Schiebe-Element vorzugsweise mit der Motor-Schlagwerk-Einheit fest verbunden vorliegt. Bei zu niedriger Anpresskraft von beispielsweise 40 N kann vorzugsweise ein orange-farbiger Bereich des Schiebe-Elements durch die Öffnung des Gerätegehäuses angezeigt werden. Bei einer zu hohen Anpresskraft von beispielsweise 180 N kann ebenfalls ein orange-farbiger Bereich des Bauteils durch die Öffnung für den Nutzer sichtbar werden. Der optimale Bereich dazwischen, der beispielsweise bei 60 bis 160 N liegt, kann zum Beispiel durch eine grüne Codierung des Schiebe-Elements angezeigt werden, die der Nutzer durch die Öffnung im Gehäuse der Werkzeugmaschine einsehen kann.

Es ist im Sinne der Erfindung bevorzugt, dass auf der Motor-Schlagwerk-Einheit das Schiebe-Element als zusätzliches Bauteil befestigt wird. Die Befestigung kann durch Formschluss oder Kraftschluss erfolgen, wobei das Bauteil vorzugsweise Kunststoff umfasst oder aus Kunststoff gebildet ist. Vorzugsweise ist das Schiebe-Element unterhalb der Gehäuseöffnung der Werkzeugmaschine angeordnet. Das Schiebe-Element weist vorzugsweise keinen zu großen Abstand zur Gehäuseinnenwandung auf, damit kein Staub ins Gerät gelangen kann. Jedoch sollte das Bauteil auch nicht zu stark an der Gehäuseinnenfläche reiben, um die Entkoppelung des Chassis nicht zu beeinträchtigen. Unabhängig von der Position, sollten keine Öffnungen zwischen Schieber und Gehäuse sichtbar werden, um eine Quetschgefahr für den Nutzer zu vermeiden. Ein wesentlicher Vorteil der Erfindung besteht darin, dass dem Nutzer der Werkzeugmaschine ermöglicht wird, die Anpresskraft während der Arbeit mit der Werkzeugmaschine in einem Optimum zu halten, um die optimale Meißel- und/oder Bohrleistung bei geringer Hand-Arm-Vibration zu erzielen.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Draufsicht auf eine bevorzugte Ausführungsform einer Werkzeugmaschine mit einer vorgeschlagenen mechanischen Vorrichtung
- Fig. 2: beispielhafte Darstellung verschiedener Anzeigemöglichkeiten der vorgeschlagenen mechanischen Vorrichtung
- Fig. 3: Seitenansicht einer bevorzugten Ausführungsform einer Werkzeugmaschine mit einer vorgeschlagenen mechanischen Vorrichtung

### Figurenbeschreibung:

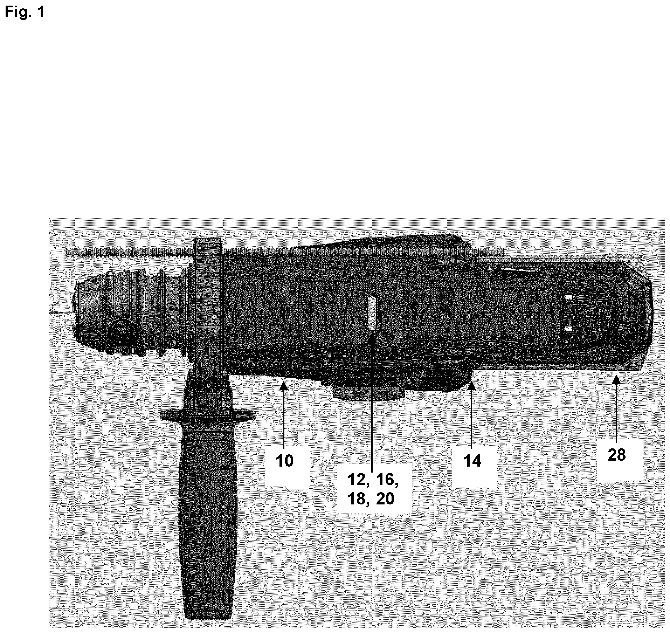

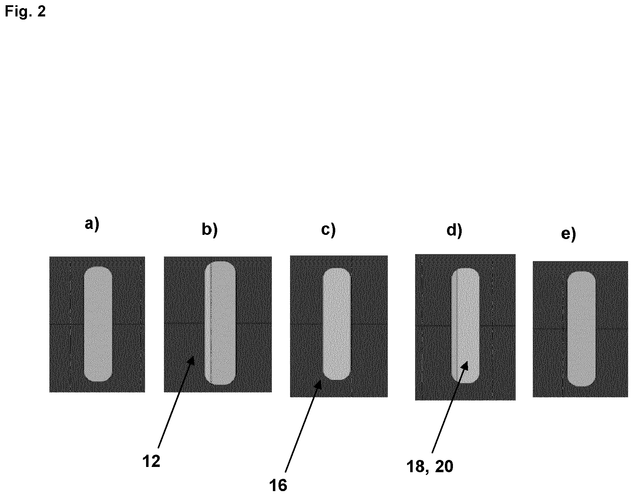

Fig. 1 zeigt eine Draufsicht auf eine bevorzugte Ausführungsform einer Werkzeugmaschine 10 mit einer vorgeschlagenen mechanischen Vorrichtung 12. Insbesondere zeigt Fig. 1 die Oberseite der Werkzeugmaschine 10, wobei die in Fig. 1 dargestellte Oberseite der Werkzeugmaschine 10 eine Sichtfläche bildet, die vom Nutzer der Werkzeugmaschine 10 leicht eingesehen werden kann. Die Werkzeugmaschine 10 umfasst ein Gehäuse 14, auf dessen Oberseite eine vorgeschlagene mechanische Vorrichtung 12 angeordnet sein kann. Die mechanische Vorrichtung 12 wird im Folgenden vorzugsweise auch als Anzeigevorrichtung 12 bezeichnet. Die Anzeigevorrichtung 12 umfasst eine Öffnung 16 in dem Gehäuse 14 der Werkzeugmaschine 10, wobei die Öffnung 16 schlitzförmig, oval, rund, dreieckig oder rechteckig ausgebildet sein kann, ohne darauf beschränkt zu sein. Unterhalb der Öffnung 16 ist ein Bauteil 18 angeordnet, das eine Codierung 20 umfasst. Das Bauteil 18 liegt vorzugsweise fest verbunden mit einer Einheit 26 aus Motor 22 und Schlagwerk 24 der Werkzeugmaschine 10 vor. Durch ein Anpressen der Werkzeugmaschine 10 auf einen zu bearbeitenden Untergrund U kann das Bauteil 18 verschoben werden, weswegen das Bauteile 18 vorzugsweise auch als Schiebe-Element 18 bezeichnet werden kann. Durch die Verschiebung des Schiebe-Elements 18 werden unterschiedliche Bereiche des Bauteils 18 bzw. der Codierung 20 für den Nutzer der Werkzeugmaschine 10 sichtbar. Beispiele für unterschiedliche Anzeigemöglichkeiten der Anzeigevorrichtung 12 sind in Fig. 2 dargestellt. Die unterschiedlichen Bereiche des Bauteils 18 bzw. der Codierung 20 symbolisieren unterschiedliche Anpresskräfte, mit denen die Werkzeugmaschine 10 gegen den Untergrund U gedrückt wird. Die Codierung 20 des Schiebe-Elements 18 kann beispielsweise angeben, ob die Werkzeugmaschine 10 mit einer zu großen, einer mittleren oder einer zu kleinen Anpresskraft auf den Untergrund U gepresst wird. In Sinne der vorliegenden Erfindung wird insbesondere der mittlere Anpressbereich als optimaler Anpress- oder Arbeitsbereich der Werkzeugmaschine 10 bezeichnet.

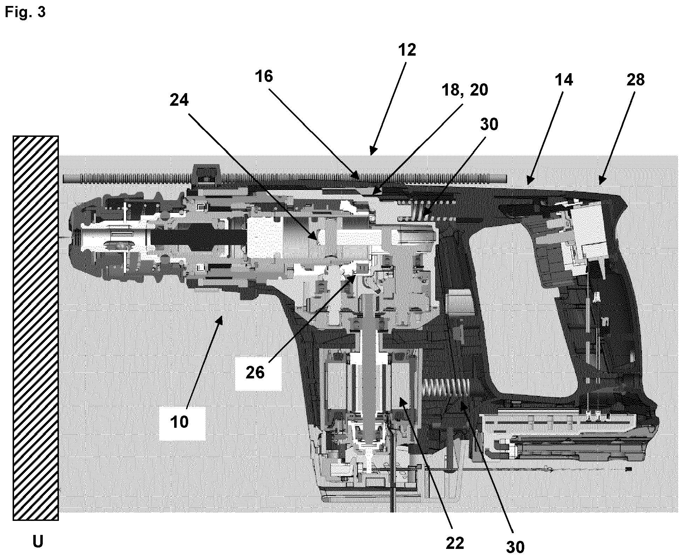

Fig. 2 zeigt eine beispielhafte Darstellung verschiedener Anzeigemöglichkeiten der vorgeschlagenen Anzeigevorrichtung 12. In Teil-Figur a) wird eine Anzeigevorrichtung 12 dargestellt, die eine zu geringe Anpresskraft anzeigt. Dabei kann der Nutzer der Werkzeugmaschine 10 durch die Öffnung 16 der Anzeigevorrichtung 16 einen farbigen Bereich des Schiebe-Elements 18 sehen, wobei die Farbe des durch die Öffnung 16 einsehbaren Bereichs des Schiebe-Elements 18 für eine geringe Anpresskraft steht. Diese geringe Anpresskraft kann beispielsweise bei 40 N liegen. In einer farbigen Darstellung von Fig. 2 ist der Bereich des Bauteils 18, der in Fig. 2a dargestellt wird, beispielsweise orange. Wenn der Nutzer die Anpresskraft erhöht, mit der die Werkzeugmaschine 10 auf den Untergrund U gepresst wird, komprimiert die Einheit 26 aus Motor 22 und Schlagwerk 24 die elastischen Elemente 30, die in Fig. 3 dargestellt sind. Durch diese Bewegung der Motor-Schlagwerk-Einheit 26 wird das Bauteil 18 verschoben, so dass ein anderer Bereich des Bauteils 18 durch die Öffnung 16 der Anzeigevorrichtung 12 sichtbar wird. In der Teil-Figur b) der Fig. 2 ist ein Bereich des Schiebe-Elements 18 durch die Öffnung 16 sichtbar, der für eine zu geringe Anpresskraft steht, wobei sich die Anpresskraft einem optimalen Bereich annähert. Die entsprechende Anpresskraft, mit der in Teil-Figur b) die Werkzeugmaschine 10 auf den Untergrund U gedrückt wird, kann beispielsweise bei 50 N liegen. In einer farbigen Darstellung von Fig. 2 ist der Bereich des Bauteils 18, der in Fig. 2b dargestellt wird, beispielsweise eine Mischung aus den Farben «orange» und «grün».

Wenn die Anpresskraft weiter erhöht wird, kann die Anpresskraft im optimalen Arbeitsbereich der Werkzeugmaschine 10 vorliegen. Diese Situation ist in Teil-Figur c) von Fig. 2 dargestellt. In einer farbigen Darstellung von Fig. 2 ist der Bereich des Bauteils 18, der in Fig. 2c dargestellt wird, beispielsweise grün. Im optimalen Arbeitsbereich liegt die Anpresskraft beispielsweise zwischen 60 und 160 N. Bei einer weiteren Erhöhung der Anpresskraft wird der optimale Arbeitsbereich der Werkzeugmaschine 10 wieder verlassen, was in Teil-Figur d) von Fig. 2 dargestellt wird. In dieser Situation kann die Anpresskraft beispielsweise bei 170 N liegen. In einer farbigen Darstellung von Fig. 2 ist der Bereich des Bauteils 18, der in Fig. 2d dargestellt wird, beispielsweise eine Mischung aus den Farben «grün» und «orange». Wenn der Nutzer die Anpresskraft weiter erhöht, komprimiert die Einheit 26 aus Motor 22 und Schlagwerk 24 die elastischen Elemente 30 immer weiter. Durch die entsprechende Bewegung der Motor-Schlagwerk-Einheit 26 wird das Bauteil 18 ebenfalls weiter verschoben, so dass ein noch anderer Bereich des Bauteils 18 durch die Öffnung 16 der Anzeigevorrichtung 12 sichtbar wird. Dieser Bereich entspricht einer zu hohen Anpresskraft, die beispielsweise einer Anpresskraft von 180 N entsprechen kann. Die Situation der zu hohen Anpresskraft wird in Teil-Figur e) der Fig. 2 dargestellt. In einer farbigen Darstellung von Fig. 2 ist der Bereich des Bauteils 18, der in Fig. 2e dargestellt wird, beispielsweise «orange».

Fig. 3 zeigt eine Seitenansicht einer bevorzugten Ausführungsform der Werkzeugmaschine 10 mit einer vorgeschlagenen mechanischen Vorrichtung 12. Zu sehen ist in Fig. 3 das Gehäuse 14 der Werkzeugmaschine 10, auf dessen Oberseite die Anzeigevorrichtung 12 angeordnet ist. Die Anzeigevorrichtung 12 umfasst die Öffnung 16, sowie das Schiebe-Element 18 mit der Codierung 20. Darüber hinaus zeigt Fig. 3 den Motor 22 der Werkzeugmaschine 10, sowie das Schlagwerk 24. Das Schlagwerk 24 und der Motor 22 der Werkzeugmaschine 10 können eine Einheit 26 bilden, die mit dem Bauteil 18 der Anzeigevorrichtung 12 fest verbunden ist. Durch das Anpressen der Werkzeugmaschine 10 auf den Untergrund U, der auf der linken Seite von Fig. 3 als gestrichelter Kasten abgebildet ist, können die elastischen Elemente 30 der Werkzeugmaschine 10 zusammengedrückt werden, wodurch sich aufgrund der Verbindung von Motor-Schlagwerk-Einheit 26 und Bauteil 18 auch das Bauteil 18 bewegt bzw. verschiebt. Die elastischen Elemente 30 können vorzugsweise als Federn ausgebildet sein, wobei die elastischen Elemente 30 vorzugsweise die Entkopplung zwischen Handgriff 28 und der Einheit 26 von Motor 22 und Schlagwerk 24 der Werkzeugmaschine 10 bewirken. Die Werkzeugmaschine 10 ist vorzugsweise als Bohr-, Kombi- oder Rotary-Hammer ausgebildet und weist eine Chassis-Bauweise mit entkoppeltem Handgriff 28 auf. Die vorgeschlagene mechanische Vorrichtung 12 ist insbesondere für die Anzeige von Anpresskräften für eine solche Werkzeugmaschine 10 in Chassis-Bauweise bzw. mit entkoppelten Handgriffen 28 geeignet. Es ist im Sinne der Erfindung ganz besonders bevorzugt, dass mit der vorgeschlagenen Anzeigevorrichtung 12 unterschiedliche Arbeitsbereiche der Werkzeugmaschine 10 angezeigt werden können, also insbesondere ob die Werkzeugmaschine 10 in einem optimalen Arbeitsbereich in Bezug auf die Anpresskraft betrieben wird oder nicht. Das Werkzeug der Werkzeugmaschine 10 ist in Fig. 3 nicht abgebildet.

Alternativ zu dem in den Fig. 1 bis 3 dargestellten Ausführungsbeispiel der Erfindung kann die mechanische Vorrichtung 12 auch ein bewegliches Bauteil 18 aufweisen, das seine Höhe verändern kann, d.h. im Sinne der Erfindung insbesondere die Höhe, um die das bewegliche Bauteil 18 aus dem Gehäuse 14 der Werkzeugmaschine 10 herausragt bzw. übersteht, verändern kann, je nach Anpresskraft, mit der die Werkzeugmaschine 10 betrieben wird. In dieser nicht dargestellten Ausgestaltung der Erfindung kann das bewegliche Bauteil 18 von einem Knopf oder Stopfen gebildet werden, der durch eine Öffnung 16 im Gehäuse 14 aus dem Gehäuse 14 herausragen und durch seine überstehende Höhe die Anpresskraft angeben kann. Wenn das bewegliche Bauteil 18 eine Codierung 20 umfasst, kann durch die Position bzw. Höhe des überstehenden beweglichen Bauteils 18 vorteilhafterweise auch angegeben werden, ob die Anpresskraft, mit der die Werkzeugmaschine 10 gegen einen zu bearbeitenden Untergrund U gedrückt wird, in einem optimalen Arbeitsbereich für die Werkzeugmaschine 10 liegt.

### Bezugszeichenliste

- 10: Werkzeugmaschine
- 12: mechanische Vorrichtung
- 14: Gehäuse
- 16: Öffnung
- 18: Bauteil
- 20: Codierung
- 22: Motor
- 24: Schlagwerk
- 26: Einheit aus Motor und Schlagwerk
- 28: Handgriff
- 30: elastische Elemente, Federn
- U: Untergrund

## Patentansprüche

1. Mechanische Vorrichtung (12) zur Anzeige einer Anpresskraft für eine Werkzeugmaschine (10),
**dadurch gekennzeichnet, dass**
die Werkzeugmaschine (10) ein bewegliches Bauteil (18) umfasst, wobei das bewegliche Bauteil (18) in Abhängigkeit von der Anpresskraft seine Position verändern kann.

2. Mechanische Vorrichtung (12) nach Anspruch 1
**dadurch gekennzeichnet, dass**
die Werkzeugmaschine (10) ein Gehäuse (14) umfasst, wobei in dem Gehäuse (14) der Werkzeugmaschine (10) eine Öffnung (16) vorgesehen ist, wobei die Öffnung (16) einen Blick freigibt auf ein Bauteil (18) der Werkzeugmaschine (10), das unterhalb der Öffnung (16) angeordnet vorliegt, wobei das Bauteil (18) eine Codierung (20) für unterschiedliche Bereiche der Anpresskraft aufweist.

3. Mechanische Vorrichtung (12) nach Anspruch 1 oder 2
**dadurch gekennzeichnet, dass**
das Bauteil (18) mit einem Motor (22), einem Schlagwerk (24) und/oder einer Einheit (26) aus Motor (22) und Schlagwerk (24) der Werkzeugmaschine (10) verbunden ist.

4. Mechanische Vorrichtung (12) nach einem der vorhergehenden Ansprüche
**dadurch gekennzeichnet, dass**
das Bauteil (18) durch ein Anpressen der Werkzeugmaschine (10) auf einen Untergrund U bewegt wird.

5. Mechanische Vorrichtung (12) nach Anspruch 4
**dadurch gekennzeichnet, dass**
das Bauteil (18) durch das Anpressen der Werkzeugmaschine (10) um eine Länge I verschiebbar ist, wobei die Länge I in einem Bereich von 0,5 bis 2 cm, bevorzugt in einem Bereich von 0,8 bis 1,2 cm und bevorzugt bei etwa 1 cm liegt.

6. Mechanische Vorrichtung (12) nach einem der Ansprüche 3 bis 5
**dadurch gekennzeichnet, dass**
der Motor (22) und das Schlagwerk (24) eine Einheit (26) bilden, wobei das Bauteil (18) mit der Einheit (26) aus Motor (22) und Schlagwerk (24) verbunden vorliegt.

7. Mechanische Vorrichtung (12) nach einem der Ansprüche 2 bis 6
**dadurch gekennzeichnet, dass**
die Codierung (20) eine Farb-Codierung ist.

8. Mechanische Vorrichtung (12) nach einem der vorhergehenden Ansprüche
**dadurch gekennzeichnet, dass**
das Bauteil (18) Markierungen und/oder Symbole umfasst, die die unterschiedlichen Bereiche der Anpresskraft anzeigen.

9. Mechanische Vorrichtung (12) nach einem der vorhergehenden Ansprüche
**dadurch gekennzeichnet, dass**
das Bauteil (18) als Schiebe-Element ausgebildet ist.

10. Mechanische Vorrichtung (12) nach einem der vorhergehenden Ansprüche
**dadurch gekennzeichnet, dass**
eine optimale Anpresskraft in einem Bereich von 60 bis 160 N liegt.

11. Werkzeugmaschine (10) mit einer mechanischen Vorrichtung (12) nach einem der Ansprüche 1 bis 10

12. Werkzeugmaschine (10) nach Anspruch 11
**dadurch gekennzeichnet, dass**
die Werkzeugmaschine (10) mindestens einen Handgriff (28) aufweist, wobei der mindestens eine Handgriff (28) von dem Schlagwerk (24) der Werkzeugmaschine (10) entkoppelt vorliegt.

13. Werkzeugmaschine (10) nach Anspruch 11 oder 12
**dadurch gekennzeichnet, dass**
die Werkzeugmaschine (10) elastische Elemente (30) aufweist, die die Entkopplung zwischen dem Schlagwerk (24) und dem mindestens einen Handgriff (28) der Werkzeugmaschine (10) bewirken.

14. Verfahren zum Betrieb einer Werkzeugmaschine (10) nach einem der Ansprüche 11 bis 13
**gekennzeichnet durch die folgenden Verfahrensschritte**
a) Betrieb der Werkzeugmaschine (10) mit einem ersten Anpressdruck,
b) Ablesen des ersten Anpressdrucks mittels der mechanischen Vorrichtung (12),
c) Korrektur des Anpressdrucks, so dass die Werkzeugmaschine (10) mit einem zweiten Anpressdruck betrieben wird, wenn der erste Anpressdruck nicht in einem optimalen Arbeitsbereich liegt, oder
d) Fortführung des Betriebs der Werkzeugmaschine (10) mit dem ersten Anpressdruck, wenn der erste Anpressdruck in einem optimalen Arbeitsbereich liegt.

15. Verfahren nach Anspruch 14
**dadurch gekennzeichnet, dass**
das bewegliche Bauteil (18) der mechanischen Vorrichtung (12) durch das Anpressen der Werkzeugmaschine (10) bewegt werden kann und durch seine Position eine Größe der Anpresskraft anzeigt.
